(19) Europäisches Patentamt
European Patent Office
Office européen des brevets

(11) **EP 3 439 114 A1**

(12) **EUROPEAN PATENT APPLICATION**
published in accordance with Art. 153(4) EPC

(43) Date of publication:
06.02.2019 Bulletin 2019/06

(21) Application number: 17773865.5

(22) Date of filing: 22.02.2017

(51) Int Cl.:
*H01R 13/03* (2006.01)      *C25D 5/10* (2006.01)
*C25D 5/26* (2006.01)      *C25D 7/00* (2006.01)
*H01R 43/16* (2006.01)

(86) International application number:
**PCT/JP2017/006531**

(87) International publication number:
**WO 2017/169318 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 31.03.2016 JP 2016070358

(71) Applicants:
• **Nisshin Steel Co., Ltd.**
**Chiyoda-ku, Tokyo 100-8366 (JP)**
• **Yazaki Corporation**
**Minato-ku**
**Tokyo 108-8333 (JP)**

(72) Inventors:
• **NISHIDA Yoshikatsu**
**Tokyo 100-8366 (JP)**
• **HIRAOKA Masashi**
**Tokyo 100-8366 (JP)**
• **NAGAO Masao**
**Tokyo 100-8366 (JP)**
• **FUJII Takahiro**
**Tokyo 100-8366 (JP)**
• **KUDO Takamichi**
**Susono-shi**
**Shizuoka 410-1107 (JP)**

(74) Representative: **Schön, Christoph**
**Dr. Schön, Neymeyr & Partner mbB**
**Bavariaring 26**
**80336 München (DE)**

(54) **AUTOMOTIVE TERMINAL**

(57) Disclosed is an automotive terminal that can be used, for example, as an electrical contact component, such as a connector, a lead frame, or a harness plug, used in an automobile. The automotive terminal comprises a Cu plating layer formed on a surface of a stainless steel plate, and a Sn plating layer formed on the Cu plating layer, the automotive terminal being characterized in that: the amount of adhesion of the Cu plating layer is from 1.5 to 45 g/m$^2$; the amount of adhesion of the Sn plating layer is from 1.5 to 15 g/m$^2$; and the surface hardness of the stainless steel plate is from 200 to 400 HV.

**Description**

TECHNICAL FIELD

The present invention relates to an automotive terminal. More specifically, the present invention relates to an automotive terminal which makes it possible to suppress increase in contact resistance even when fine sliding of a connecting member for automobiles, such as an electrical connecting terminal is repeated after the connecting member is fitted to the automotive terminal, and which increases reliability of electrical connection as well, and a method for producing the same.

BACKGROUND ART

The number of connecting terminals which are used in an automobile tends to be increased in accordance with increase of the number of electronic control devices to be used therein. It has been required for the connecting terminal to be miniaturized and lightened from the viewpoint of improvement in fuel efficiency of an automobile, space saving, portability of a mobile phone and the like. In order to respond to these requirements, it is necessary that the connecting terminal is prevented from deformation due to force (insertion force) which is applied when the connecting terminal is fitted to another connecting terminal, that the connecting terminal is miniaturized, and that contact pressure between the connecting terminals is maintained at their connected portion. Accordingly, it has been required that a material having strength higher than a copper alloy hitherto used is employed in a connecting terminal for automobiles.

As a material having strength higher than the copper alloy, a stainless steel plate is considered to be used. The stainless steel plate is suitable from the viewpoint of miniaturization, lightening and reduction in cost, since the stainless steel plate has mechanical strength higher than the copper alloy, and is small in specific gravity and inexpensive.

As a material for an electrical contact member, a stainless steel plate on which a plating layer made of a metal different from the stainless steel is formed has been developed in order to reduce contact resistance of the surface of the stainless steel plate (see, for example, Patent Literatures 1 to 3). However, when vibrations are applied to a connecting terminal in which the above stainless steel plate is used, and fine sliding is repeated at the contact point under a condition of contacting, the plating layer of the stainless steel plate is worn away at an early stage, and the stainless steel plate used as a base material is exposed to the outside. Therefore, there arises a defect in the connecting terminal that a contact resistance is increased at the contact point.

In addition, as a terminal which inhibits increase of electric resistance at a contact point due to slight sliding abrasion caused by application of vibrations to the terminal under a condition of contacting, a terminal having a connecting portion to be connected to a connecting portion of another terminal, wherein the connecting portion of the terminal includes a portion of a base material having a fine asperity pattern on a surface of the portion of the base material, a first layer which is formed on a surface of at least the portion of the base material included in the connecting portion and which has a surface formed into the fine asperity pattern, and a second layer formed on the surface of the first layer, wherein the first layer is provided for connecting the base material with the second layer, and has a hardness higher than the second layer, and wherein the second layer is provided for enhancing electric conductivity and lubrication property. However, the above-mentioned terminal has some defects such that a complicated surface processing is necessitated for the terminal when the fine asperity pattern is formed on the surface of the first layer, and that whether or not the asperity pattern has appropriate surface roughness should be confirmed one by one.

Accordingly, in recent years, it has been desired to develop an automotive terminal which does not necessitate a fine asperity pattern on its surface, and which can suppress increase in contact resistance even when fine sliding is repeated at the contact point.

PRIOR ART LITERATURES

PATENT LITERATURES

Patent Literature 1: Japanese Patent Unexamined Publication No. 2004-300489
Patent Literature 2: Japanese Patent Unexamined Publication No. 2007-262458
Patent Literature 3: Japanese Patent Unexamined Publication No. 2015-028208
Patent Literature 4: Japanese Patent Unexamined Publication No. 2015-220145

SUMMARY OF THE INVENTION

PROBLEMS TO BE SOLVED BY THE INVENTION

The present invention has been made in view of the above-mentioned prior arts. An object of the present invention is to provide an automotive terminal which does not necessitate a fine asperity pattern on its surface, and which can suppress increase in contact resistance even when fine sliding is repeated at the contact point.

MEANS FOR SOLVING THE PROBLEMS

The present invention relates to:

(1) an automotive terminal including a stainless steel plate, wherein a Cu plating layer is formed on a surface of the stainless steel plate, and a Sn plating layer is formed on the Cu plating layer, in which the deposition amount of the Cu plating layer is 1.5 to 45 $g/m^2$; the deposition amount of the Sn plating layer is 1.5 to 15 $g/m^2$; and the surface hardness of the stainless steel plate is 200 to 400 HV; and
(2) a process for producing an automotive terminal including a stainless steel plate, which includes forming a Cu plating layer on a surface of a stainless steel plate having a surface hardness of 200 to 400 HV so that the deposition amount of the Cu plating layer is 1.5 to 45 $g/m^2$, and forming a Sn plating layer on the Cu plating layer so that the deposition amount of the Sn plating layer is 1.5 to 15 $g/m^2$.

EFFECTS OF THE INVENTION

According to the present invention, there can be provided an automotive terminal, which does not necessitate a fine asperity pattern on its surface, and which can suppress increase in contact resistance even when fine sliding is repeated at the contact point.

BRIEF DESCRIPTION OF DRAWINGS

Fig. 1 is a schematic side view of one embodiment of a male terminal of an automotive terminal according to the present invention.
Fig. 2 is a schematic cross sectional view of a connection structure in which a male terminal is used as an automotive terminal according to the present invention.
Fig. 3 is a schematic explanatory view of an apparatus for examining abrasion resistance in fine sliding, used in each working example and each comparative example.
Fig. 4 (a) is an X-ray diffraction pattern of a plating layer of a material for an automotive terminal obtained in Example 1, and Fig 4 (b) is an X-ray diffraction pattern of a plating layer of a material for an automotive terminal obtained in Example 3.

MODE FOR CARRYING OUT THE INVENTION

As described above, the automotive terminal according to the present invention is an automotive terminal which includes a stainless steel plate. The automotive terminal includes a Cu plating layer formed on a surface of the stainless steel plate, and a Sn plating layer formed on the Cu plating layer, wherein the deposition amount of the Cu plating layer is 1.5 to 45 $g/m^2$; the deposition amount of the Sn plating layer is 1.5 to 15 $g/m^2$; and the surface hardness of the stainless steel plate is 200 to 400 HV.
Since the automotive terminal according to the present invention has the above-mentioned structure, the automotive terminal does not necessitate a fine asperity pattern on its surface, and is excellent in a property for suppressing increase in contact resistance even when fine sliding is repeated (hereinafter, this property is referred to as abrasion resistance in fine sliding) at the contact point.
In the automotive terminal according to the present invention, a stainless steel is used. A Cu plating layer is formed on a surface of the stainless steel plate, and a Sn plating layer formed on the Cu plating layer. The stainless steel plate in which the Cu plating layer is formed on the surface of the stainless steel plate, and the Sn plating layer formed on the Cu plating layer can be produced by, for example, forming a Cu plating layer on the surface of the stainless steel plate having a surface hardness of 200 to 400 HV so that the deposition amount of the Cu plating layer is 1.5 to 45 $g/m^2$, and forming a Sn plating layer on the Cu plating layer so that the deposition amount of the Sn plating layer is 1.5 to 15 g/m$^2$.

Examples of the stainless steel plate include plates of stainless steel prescribed in JIS (Japanese Industrial Standards), such as plates of austenitic stainless steel such as SUS301, SUS304 and SUS316; plates of ferritic stainless steel such as SUS430, SUS430LX and SUS444; plates of martensitic stainless steel such as SUS410 and SUS420; and the like. The present invention is not limited only to those exemplified ones.

The thickness, length and width of the stainless steel plate are not particularly limited, respectively, and can be appropriately adjusted in accordance with the kind of the stainless steel plate, uses of the automotive terminal, and the like. One example of the thickness of the stainless steel plate includes 50 $\mu$m to 0.5 mm or so.

The surface hardness of the stainless steel plate is 200 HV or more from the viewpoint of suppression of lowering of abrasion resistance in fine sliding due to increase of contact resistance caused by oxidation of the stainless steel plate, which is exposed to the surface by plastic flow of the Cu plating layer due to shear stress during sliding, and 400 HV or less from the viewpoint of suppression of abrasion due to slight plastic deformation of the stainless steel plate caused by shear stress during sliding and plastic flow of the Cu plating layer during sliding, and suppression of lowering of abrasion resistance in fine sliding due to exposure of the stainless steel plate to the surface. The surface hardness of the stainless steel plate can be easily controlled by conducting annealing, cold rolling or the like to the stainless steel plate.

The surface hardness of the stainless steel plate means a Vickers hardness (HV) of the surface of the stainless steel plate, and is a hardness as determined by using a Micro Vickers Hardness Tester (product number: HM-221) commercially available from Mitutoyo Corporation. The specific method for determining the surface hardness of the stainless steel plate is described in the following working examples.

Incidentally, a Ni plating layer can be formed on the surface of the stainless steel plate from the viewpoint of increase in adhesion of the stainless steel plate and the Cu plating layer within a scope which would not hinder an object of the present invention. The Ni plating layer can be formed by means of, for example, Ni plating, Ni strike plating, and the like. The Ni plating and the Ni strike plating can be carried out by an electroplating method or an electroless plating method. The electroplating method includes, for example, an electroplating method using a Wood's bath, an electroplating method using a Watts bath, an electroplating method using a sulfamic acid bath and the like, and the present invention is not limited only to those exemplified ones. When the Ni plating layer is formed on the stainless steel plate, the adhesion amount of the Ni plating layer is preferably 0.4 g/m$^2$ or more, and more preferably 0.9 g/m$^2$ or more, from the viewpoint of increase in adhesion of the stainless steel plate and the Cu plating layer, and preferably 4 g/m$^2$ or less, and more preferably 3 g/m$^2$ or less, from the viewpoint of increase in adhesion of the stainless steel plate and the Cu plating layer.

A method for forming a Cu plating layer on the stainless steel plate includes an electroplating method and an electroless plating method. The Cu plating layer can be formed by any of these methods in the present invention. The electroplating method includes, for example, an electroplating method using a copper sulfate bath including copper sulfate and sulfuric acid, and as occasion demands, chlorine ion, a plating inhibitor, a plating accelerator and the like, and the present invention is not limited only to the exemplified method. The adhesion amount of the Cu plating layer is 1.5 to 45 g/m$^2$ from the viewpoint of improvement in abrasion resistance in fine sliding.

A method for forming a Sn plating layer on the Cu plating layer formed on the stainless steel plate includes an electroplating method and an electroless plating method. The Sn plating layer can be formed by any of these methods in the present invention. The electroplating method includes an electroplating method using a Sn plating bath such as a methanesulfonic acid bath, a Ferrostan bath or a halogen bath, and the like, and the present invention is not limited only to those exemplified ones. The adhesion amount of the Sn plating layer formed on the Cu plating layer is 1.5 to 15 g/m$^2$ from the viewpoint of improvement in abrasion resistance in fine sliding.

The plating layers made of the Cu plating layer and the Sn plating layer can be formed on only one surface of the stainless steel plate, or on both surfaces of the stainless steel plate in the present invention. In the above-mentioned plating layer, the Sn plating layer forms the outermost surface layer of the plating layer formed on the automotive terminal according to the present invention.

After the formation of the Sn plating layer on the stainless steel plate, it is preferred that a reflow treatment of the stainless steel plate is carried out by heating the stainless steel plate at the melting point of Sn or higher in order to inhibit generation of a whisker in the Sn plating layer.

The automotive terminal according to the present invention will be described based on the following figures, and the present invention is not limited only to embodiments described in the figures.

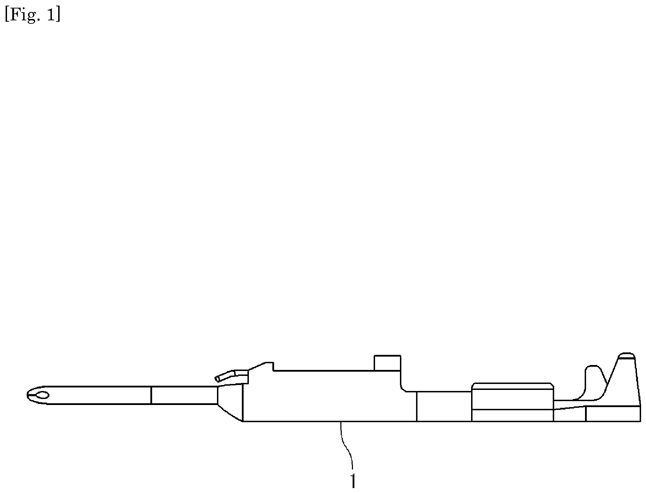

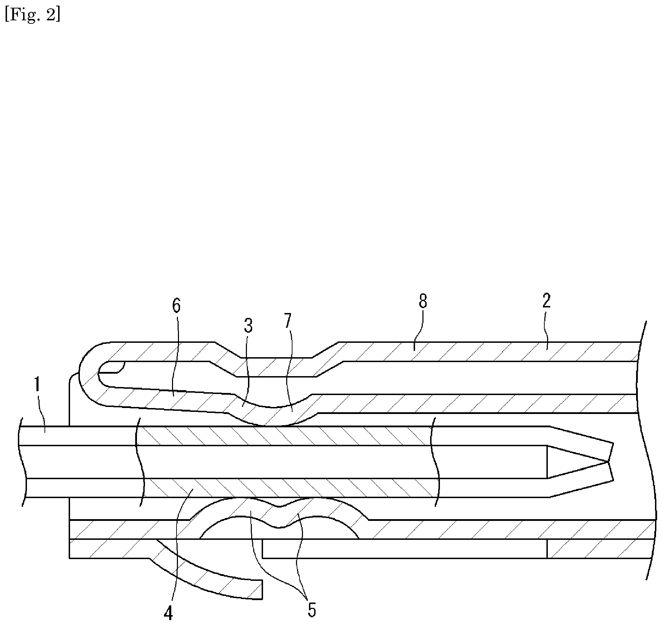

Fig. 1 is a schematic side view of one embodiment of a male terminal of the automotive terminal according to the present invention. Fig. 2 is a schematic cross sectional view of a connection structure in which a male terminal is used as the automotive terminal according to the present invention.

As shown in Fig. 2, a male terminal 1 has a connecting portion 4 to be electrically connected to a mating terminal, female terminal 2. The male terminal 1 is formed by blanking the above-mentioned stainless steel plate in which the Sn plating layer is formed on the Cu plating layer, and then conducting a bending process, a cutting process, a hammering process and the like to the stainless steel plate so that the Sn plating layer formed on the stainless steel plate becomes an outer surface sliding on the female terminal 2.

The connecting portion of the female terminal 2 includes a cylindrical projecting portion 5 and a projecting portion 7 of an elastic contact member 6. The female terminal 2 is formed by, for example, blanking a metal plate made of a metal such as stainless steel or copper, and then conducting a bending process, a cutting process, a hammering process and the like to the metal plate. The female terminal 2 has a barrel portion (not shown in the figure) connected to a terminal of an electric wire, and a cylindrical portion 8 into which the male terminal 1 is inserted. The barrel portion (not shown in the figure) has an insulation barrel for crimping a coating film of an electric wire and a wire barrel for crimping a core wire of the electric wire.

Since the automotive terminal according to the present invention is excellent in abrasion resistance in fine sliding, the automotive terminal can be suitably used in, for example, electrical contact members such as a connector, a lead frame and a harness plug, which are used in automobiles.

EXAMPLES

Next, the present invention is more specifically described based on working examples. However, the present invention is not limited only to those examples.

In the following working examples and comparative examples, three kinds of a stainless steel plate having a thickness of 0.2 mm were used. Chemical components of each stainless steel plate are shown in Table 1.

Table 1

| Kind of Stainless steel | Kind of Steel | Chemical components (% by mass) | | | | | | |
|---|---|---|---|---|---|---|---|---|
| | | C | Si | Mn | P | S | Ni | Cr |
| A | SUS410 | 0.054 | 0.48 | 0.38 | 0.033 | 0.001 | 0.20 | 12.49 |
| B | SUS430 | 0.069 | 0.52 | 0.33 | 0.028 | 0.002 | 0.14 | 17.42 |
| C | SUS304 | 0.070 | 0.50 | 0.78 | 0.029 | 0.007 | 8.05 | 18.20 |

Examples 1 to 12 and Comparative Examples 1 to 10

An annealing and acid washing treatment and a cold rolling treatment were repeatedly conducted to each of the stainless steel plates A, B and C under various conditions, to give stainless steel plates having a surface hardness as shown in Table 2. The surface hardness of the stainless steel was determined in accordance with the following method after the production of a stainless steel plate having a Cu plating layer formed on the stainless steel plate, and a Sn plating layer formed on the Cu plating layer (hereinafter referred to as a material for an automotive terminal).

Each stainless steel plate was cut so as to have a size of 110 mm in length and 300 mm in width, and the stainless steel plate was subjected to alkali degreasing and acid washing by a conventional method.

When a Ni strike plating layer was formed on the stainless steel plate, the Ni strike plating was carried out under the following conditions for Ni strike plating by dipping the stainless steel plate in a Wood's bath, and applying a current to the bath so as to form a Ni plating layer having a deposition amount of 0.9 g/m$^2$.

[Conditions for Ni strike plating]

- Ni plating solution (Wood's bath): 240 g/L of nickel chloride and 125 mL/L of hydrochloric acid (pH: 1.2)
- Temperature of plating solution: 35°C
- Current density: 8 A/dm$^2$

In the column "Employment of Ni strike plating" shown in Table 2, the term "no" means that Ni strike plating was not carried out, and the term "yes" means that Ni strike plating was carried out.

Next, the above-mentioned stainless steel plate was dipped in a sulfonic acid bath, and Cu plating was carried out under the following conditions for Cu plating, to form a Cu plating layer having a deposition amount as shown in Table 2. Thereafter, the stainless steel plate was dipped in a methanesulfonic acid bath, and Sn plating was carried out under the following conditions for Sn plating, to form a Sn plating layer having a deposition amount as shown in Table 2. As a result, a material for an automotive terminal was produced.

[Conditions for Cu plating]

- Cu plating solution (copper sulfate plating bath): 200 g/L of copper sulfate and 45 g/L of sulfuric acid
- Temperature of plating solution: 30°C
- Current density: 15 A/dm$^2$

[Conditions for Sn plating]

- Sn plating solution (methanesulfonic acid bath): Sn$^{2+}$ 50 g/L, free acid 120 mL/L (pH: 0.2)
- Temperature of plating solution: 30°C
- Current density: 10 A/dm$^2$

Next, a reflow treatment of the material for an automotive terminal obtained in the above was carried out by heating the material for an automotive terminal at a melting point of Sn or higher, to give a material for an automotive terminal in which a reflow treatment was conducted to the stainless steel plate. In the column "Employment of reflow treatment" shown in Table 2, the term "yes" means that the reflow treatment was carried out, and the term "no" means that the reflow treatment was not carried out.

The material for an automotive terminal obtained in the above was cut to give a test piece for determining the deposition amount of a plating layer of the material for an automotive terminal, a test piece for determining surface hardness of the stainless steel plate, and a test piece for determining abrasion resistance in fine sliding of the material for an automotive terminal.

Each deposition amount of a Ni plating layer, a Cu plating layer and a Sn plating layer of the material for an automotive terminal obtained in the above was determined in accordance with the following determining method of deposition amount of a plating layer. Its results are shown in Table 2.

[Determining method of deposition amount of a plating layer]

The test piece for determining the deposition amount of a plating layer obtained in the above was dipped in sulfuric acid to dissolve each plating layer in the sulfuric acid, to obtain a solution. The solution was used to determine a deposition amount of an element contained in the deposition layer, and the deposition amount was determined by means of an inductively coupled plasma (ICP) emission spectroscopy commercially available from Shimadzu Corporation under a product number of ICPS-8100.

The surface hardness of the stainless steel plate used in the material for an automotive terminal obtained in the above was determined in accordance with the following method for determining a surface hardness of the stainless steel plate. Its results are shown in Table 2 was used.

[Method for determining a surface hardness of the stainless steel plate]

As a test piece for determining a surface hardness of the stainless steel plate obtained in the above, a rectangular test piece having a size of 25 mm in length and 15 mm in width. The test piece was embedded in an epoxy resin, and the epoxy resin was cured to give an embedded product. The embedded product was cut, and its cut section was polished to form a mirror plane by means of an automatic polishing device.

Next, a Vickers hardness of the polished surface of the test piece was determined within a range from the surface of the stainless steel plate to the depth of 15 $\mu$m from the surface in the central direction of the thickness of the plate under a load of 10 g at arbitrary 5 points by means of a Micro Vickers Hardness Tester (product number: HM-221) commercially available from Mitutoyo Corporation, and its average was regarded as a surface hardness of the stainless steel plate.

Next, abrasion resistance in fine sliding of the material for an automotive terminal was determined in accordance with the following determining method of abrasion resistance in fine sliding. Its results are shown in Table 2 was used.

[Determining method of abrasion resistance in fine sliding]

The test piece for determining abrasion resistance in fine sliding of the material for an automotive terminal obtained in the above was cut to give a rectangular substrate plate having a size of 5 mm in length and 40 mm in width, and a rectangular test piece having a size of 5 mm in width and 10 mm in length.

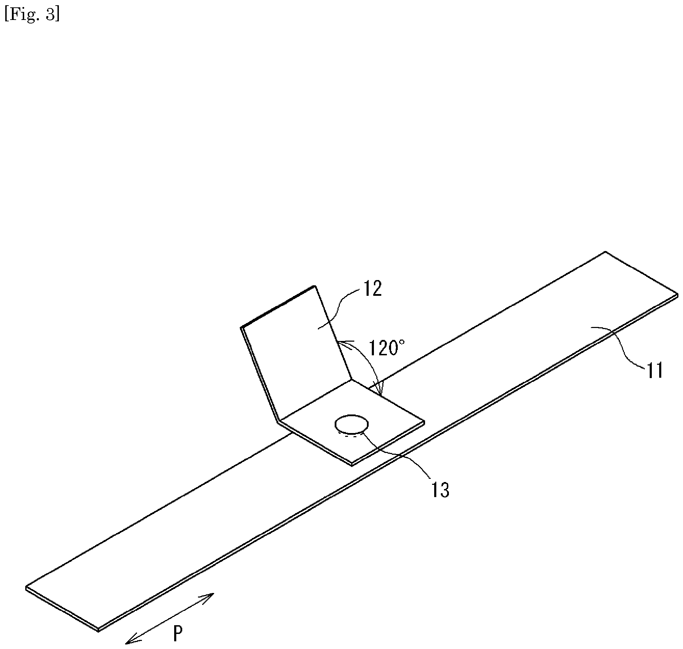

The abrasion resistance in fine sliding was determined by using a sliding tester (product number: CRS-G2050) manufactured by Kabushikikaisha Yamasaki Seiki Kenkyusho, and arranging the substrate plate 11 and the test piece 12 in the sliding tester as shown in Fig. 3. Incidentally, Fig. 3 is a schematic explanatory view of an apparatus used in examining abrasion resistance in fine sliding.

More specifically, a hemispherical convex 13 having a radius of 1.2 mm and a maximum depth of 0.3 mm was formed at the central portion of one half of the test piece 12, and then the test piece 12 was folded so that a bending angle between one half portion and another half portion became 120°. The surface of the substrate plate 11 was contacted with the top of the convex 13 of the test piece 12, and contacting pressure between the substrate plate 11 and the convex 13 was adjusted to 3.0 N by pressing the test piece 12 with a spring (not shown in the figure). While the contacting pressure was maintained to 3.0 N, the substrate plate 11 was slid as shown by an arrow P in a moving distance of 100 $\mu$m when the substrate plate 11 was reciprocated in a longitudinal direction. At that time, a sliding procedure for reciprocating the substrate plate 11 one time from the initiated sliding position was regarded as one cycle. The sliding procedure was carried out for one cycle, 200 cycles and 400 cycles. Thereafter, an electric current of 10 mA was applied between the substrate plate 11 and the test piece 12, and change of voltage between the substrate plate 11 and the test piece 12 was determined by a four-terminal sensing method. The contact resistance was calculated based on the equation:

$$[\text{Contact resistance}] = [\text{Voltage which was detected}] \div [\text{Current which was applied}],$$

and the abrasion resistance in fine sliding was evaluated in accordance with the following evaluation criteria:

(Evaluation criteria)

◎ Each of the difference between the resistance after one cycle of the sliding procedure and the resistance after 200 cycles of the sliding procedure, and the difference between the resistance after one cycle of the sliding procedure and the resistance after 400 cycles of the sliding procedure are 10 m$\Omega$ or less, respectively.

○: The difference between the resistance after one cycle of the sliding procedure and the resistance after 200 cycles of the sliding procedure is 10 m$\Omega$ or less, and the difference between the resistance after one cycle of the sliding procedure and the resistance after 400 cycles of the sliding procedure exceeds 10 m$\Omega$.

×: The difference between the resistance after one cycle of the sliding procedure and the resistance after 200 cycles of the sliding procedure exceeds 10 m$\Omega$, regardless the difference between the resistance after one cycle of the sliding procedure and the resistance after 400 cycles of the sliding procedure.

[Table 2]

| Ex. and Comp. Ex. No. | Kind of stainless steel plate | Employment of Ni strike plating | Deposition amount of plating layer (g/m²) | | Employment of reflow treatment | Surface hardness of steel plate (HV) | Abrasion resistance in fine sliding |
|---|---|---|---|---|---|---|---|
| | | | Cu plating layer | Sn plating layer | | | |
| Ex. 1 | A | Yes | 4.5 | 7.3 | Yes | 235 | ◎ |
| Ex. 2 | B | Yes | 4.5 | 7.3 | Yes | 230 | ◎ |
| Ex. 3 | C | Yes | 4.5 | 7.3 | No | 232 | ○ |
| Ex. 4 | A | Yes | 45 | 3.6 | Yes | 213 | ◎ |
| Ex. 5 | B | Yes | 45 | 7.3 | Yes | 210 | ◎ |
| Ex. 6 | C | No | 1.9 | 14.7 | Yes | 340 | ◎ |
| Ex. 7 | A | Yes | 22 | 7.3 | No | 202 | ○ |
| Ex. 8 | B | Yes | 22 | 7.3 | Yes | 310 | ◎ |

(continued)

| Ex. and Comp. Ex. No. | Kind of stainless steel plate | Employment of Ni strike plating | Deposition amount of plating layer (g/m$^2$) | | Employment of reflow treatment | Surface hardness of steel plate (HV) | Abrasion resistance in fine sliding |
|---|---|---|---|---|---|---|---|
| | | | Cu plating layer | Sn plating layer | | | |
| Ex. 9 | A | Yes | 1.5 | 1.5 | Yes | 250 | ◎ |
| Ex.10 | B | No | 22 | 14.7 | Yes | 280 | ◎ |
| Ex.11 | B | Yes | 45 | 14.7 | Yes | 390 | ◎ |
| Ex.12 | C | No | 45 | 3.6 | Yes | 235 | ◎ |
| Comp. Ex. 1 | A | Yes | 45 | 3.6 | Yes | 190 | × |
| Comp. Ex. 2 | B | Yes | 2.7 | 3.6 | Yes | 180 | × |
| Comp. Ex. 3 | C | Yes | 22 | 7.3 | Yes | 120 | × |
| Comp. Ex. 4 | A | Yes | 2.7 | 3.6 | Yes | 430 | × |
| Comp. Ex. 5 | B | Yes | 4.5 | 3.7 | Yes | 450 | × |
| Comp. Ex. 6 | C | Yes | 4.5 | 7.3 | No | 480 | × |
| Comp. Ex. 7 | A | Yes | 1.4 | 7.3 | Yes | 231 | × |
| Comp. Ex. 8 | B | Yes | 1.3 | 10 | Yes | 240 | × |
| Comp. Ex. 9 | C | Yes | 9 | 1.1 | Yes | 301 | × |
| Comp. Ex.10 | B | Yes | Not existed | 7.3 | Yes | 232 | × |

From the results shown in Table 2, it can be seen that the automotive terminal obtained in each working example is more excellent in abrasion resistance in fine sliding than the automotive terminal obtained in each comparative example.

Referential example 1

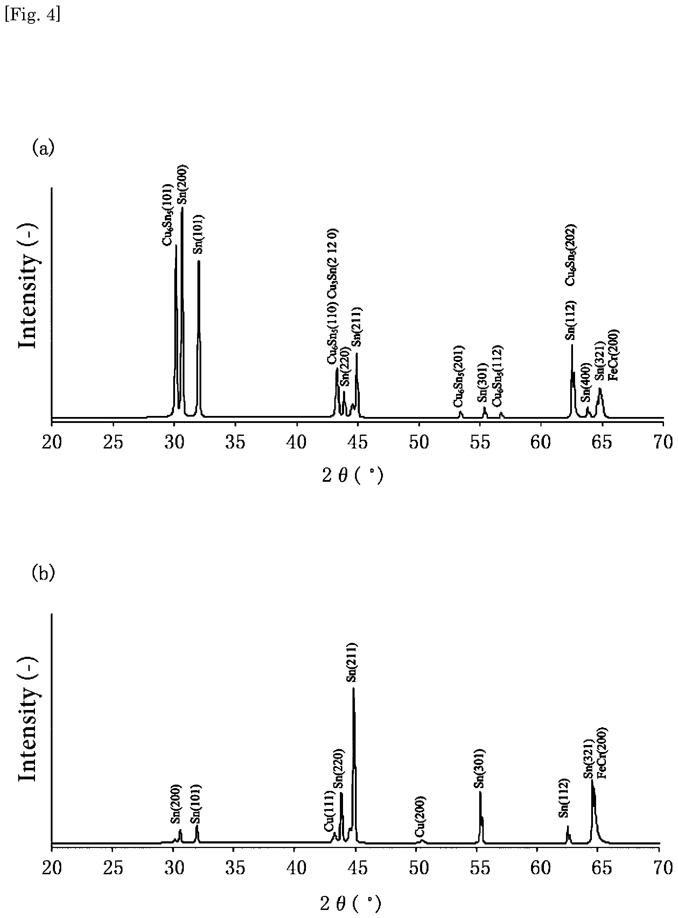

The X-ray diffraction of each plating layer of the material for an automotive terminal obtained in Example 1 and the material for an automotive terminal obtained in Example 3 was determined by means of an X-ray diffraction instrument commercially available from Rigaku Corporation under the product number of RINT2500 [X-ray: Cuka, tube voltage: 40 kV, tube current: 100 mA, step width: 0.02°, measuring speed: 4°/min]. Its results are shown in Fig. 4. Fig. 4 (a) is an X-ray diffraction pattern of the plating layer of the material for an automotive terminal obtained in Example 1, and Fig. 4 (b) is an X-ray diffraction pattern of the plating layer of the material for an automotive terminal obtained in Example 3.
From the results shown in Fig. 4, according to the material for an automotive terminal obtained in Example 1, it can be seen that an intermetallic compound of Cu and Sn is formed since the reflow treatment was carried out. In contrast, according to the material for an automotive terminal obtained in Example 3, it can be seen that an intermetallic compound of Cu and Sn is not formed since the reflow treatment was not carried out.
In addition, from the results shown in Table 2, the material for an automotive terminal obtained in Example 1 and the material for an automotive terminal obtained in Example 3 exhibit excellent abrasion resistance in fine sliding. Accordingly, it can be seen that the material for an automotive terminal exhibits excellent abrasion resistance in fine sliding, regardless of the formation of an intermetallic compound due to the reflow treatment.

Accordingly, it can be seen that when the material for an automotive terminal is used in an automotive terminal, the automotive terminal does not necessitate a fine asperity pattern on its surface, and can suppress increase in contact resistance even when fine sliding is repeated at a contact point.

INDUSTRIAL APPLICABILITY

The automotive terminal according to the present invention is expected to be used in, for example, electrical contact members such as a connector, a lead frame and a harness plug, which are used in automobiles.

DESCRIPTION OF THE REFERENCE NUMERALS

1: Male terminal
2: Female terminal
3: Connecting portion
4: Connecting portion
5: Projecting portion
6: Elastic contact member
7: Projecting portion
8: Cylindrical portion
11: Substrate plate
12: Test piece
13: Convex of test piece

**Claims**

1. An automotive terminal comprising a stainless steel plate, wherein a Cu plating layer is formed on a surface of the stainless steel plate, and a Sn plating layer is formed on the Cu plating layer, in which the deposition amount of the Cu plating layer is 1.5 to 45 $g/m^2$; the deposition amount of the Sn plating layer is 1.5 to 15 $g/m^2$; and the surface hardness of the stainless steel plate is 200 to 400 HV.

2. A process for producing an automotive terminal comprising a stainless steel plate, which comprises:

   forming a Cu plating layer on a surface of a stainless steel plate having a surface hardness of 200 to 400 HV so that the deposition amount of the Cu plating layer is 1.5 to 45 $g/m^2$, and
   forming a Sn plating layer on the Cu plating layer so that the deposition amount of the Sn plating layer is 1.5 to 15 $g/m^2$.

[Fig. 1]

1

[Fig. 2]

[Fig. 3]

[Fig. 4]

(a)

(b)

## INTERNATIONAL SEARCH REPORT

| International application No. |
|---|
| PCT/JP2017/006531 |

**A. CLASSIFICATION OF SUBJECT MATTER**

*H01R13/03*(2006.01)i, *C25D5/10*(2006.01)i, *C25D5/26*(2006.01)i, *C25D7/00*(2006.01)i, *H01R43/16*(2006.01)i

According to International Patent Classification (IPC) or to both national classification and IPC

**B. FIELDS SEARCHED**

Minimum documentation searched (classification system followed by classification symbols)
H01R13/03, C25D5/10, C25D5/26, C25D7/00, H01R43/16

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-203534 A (Nisshin Steel Co., Ltd.),<br>18 July 2003 (18.07.2003),<br>claims 1, 3; paragraphs [0001], [0017], [0024] to [0031]<br>(Family: none) | 1,2<br>1,2 |
| Y | JP 2007-277715 A (The Furukawa Electric Co., Ltd.),<br>25 October 2007 (25.10.2007),<br>paragraphs [0003], [0004], [0033], [0048] to [0058]; fig. 1<br>(Family: none) | 1,2 |

[×] Further documents are listed in the continuation of Box C.      [ ] See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17 April 2017 (17.04.17) | 09 May 2017 (09.05.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**INTERNATIONAL SEARCH REPORT**

International application No.

PCT/JP2017/006531

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-221166 A  (JX Nippon Mining & Metals Corp.),<br>28 October 2013 (28.10.2013),<br>claims 7, 9, 15; paragraphs [0001], [0049]<br>& WO 2013/153832 A1      & TW 201341171 A<br>& CN 104204296 A         & KR 10-2015-0002803 A | 1,2 |
| A | JP 2010-267419 A  (The Furukawa Electric Co., Ltd.),<br>25 November 2010 (25.11.2010),<br>(Family: none) | 1,2 |

Form PCT/ISA/210 (continuation of second sheet) (January 2015)

**EP 3 439 114 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004300489 A
- JP 2007262458 A
- JP 2015028208 A
- JP 2015220145 A